# EUROPEAN PATENT SPECIFICATION

(11) **EP 3 930 451 B1**
(45) Date of publication and mention of the grant of the patent: **14.06.2023**
(21) Application number: 20708210.8
(22) Date of filing: 27.01.2020
(51) Int. Cl.: A01K 51/00

(54) **DEVICE FOR VAPORIZING OXALIC ACID COMPRISING A SEMI-AUTOMATIC DOSING SYSTEM OF THE POWDER OF OXALIC ACID**
VORRICHTUNG ZUM VERDAMPFEN VON OXALSÄURE MIT EINEM HALBAUTOMATISCHEN DOSIERSYSTEM FÜR DAS PULVER DER OXALSÄURE
DISPOSITIF DE VAPORISATION D'ACIDE OXALIQUE COMPRENANT UN SYSTÈME DE DOSAGE SEMI-AUTOMATIQUE DE LA POUDRE D'ACIDE OXALIQUE

(30) Priority: 27.02.2019 IT 201900002833
(43) Date of publication of application: 05.01.2022
(73) Proprietor: Benicchi, Umberto, 57025 Piombino (LI) (IT)
(72) Inventor: Benicchi, Umberto, 57025 Piombino (LI) (IT)
(74) Representative: Garavelli, Paolo
(86) International application number: PCT/IT2020/000008
(87) International publication number: WO 2020/174503

(56) References cited:
- WO-A1-2017/158198
- CA-A1- 2 677 936
- ES-U- 1 164 236
- KR-A- 20110 088 193
- US-A1- 2018 263 222

## Description

The present invention refer to a device for vaporizing oxalic acid comprising a semi-automatic dosing system of the powder of oxalic acid.

In particular, the invention refers to a temperature-regulated electric device for vaporizing oxalic acid di-hydrated used in apiculture, comprising a semi-automatic dosing system of the oxalic acid to be vaporized.

Devices for vaporizing oxalic acid are known, which comprise a heater supplied by electric current which produces heat, used for heating one or more doses of oxalic acid contained in a seat, making them evaporate.

In known devices for vaporizing oxalic acid, in order to obtain an optimum treatment, it is very important to accurately dose the amount of oxalic acid aimed to be vaporized. Such devices are known from document ES-U- 1164236.

If the seat containing the oxalic acid to be vaporized is configured to house a single dose thereof, its exhaustion will be the final moment of administration of oxalic acid to a single family of bees; if, instead, the seat containing the oxalic acid to be vaporized is configured to contain more doses thereof, in order to administer its correct dose to every family of bees, the operator will not be able to wait for the exhaustion of the amount of oxalic acid contained in the suitable seat, but rather will be compelled to measure the administration time of the vapors to each family, in order not to exceed a single dose.

In known devices for vaporizing oxalic acid, both single-dose and not, the dosing of the correct amount of powder of oxalic acid to be inserted in the suitable seat and the measure of the vapors administered to every family of bees pertains to the operator, which implies the risk of a scarce accuracy.

Object of the present invention is providing a device for vaporizing oxalic acid comprising a semi-automatic system for dosing its powder, which allows the operator to measure the various doses to be administered to the families of bees in a simple, quick and accurate way.

The above and other objects and advantages of the invention, as will appear from the following description, are obtained with an electric device for vaporizing oxalic acid comprising a semi-automatic dosing system of the powder of oxalic acid as claimed in the independent claim. Preferred embodiments and non-trivial variations of the present invention are the subject matter of the dependent claims.

It is intended that the enclosed claims are an integral part of the present description.

It will be immediately obvious that numerous variations and modifications (for example related to shape, sizes, arrangements and parts with equivalent functionality) can be made to what is described, without departing from the scope of the invention, as appears from the enclosed claims.

The present invention will be better described by some preferred embodiments thereof, provided as a non-limiting example, with reference to the enclosed drawings, in which:

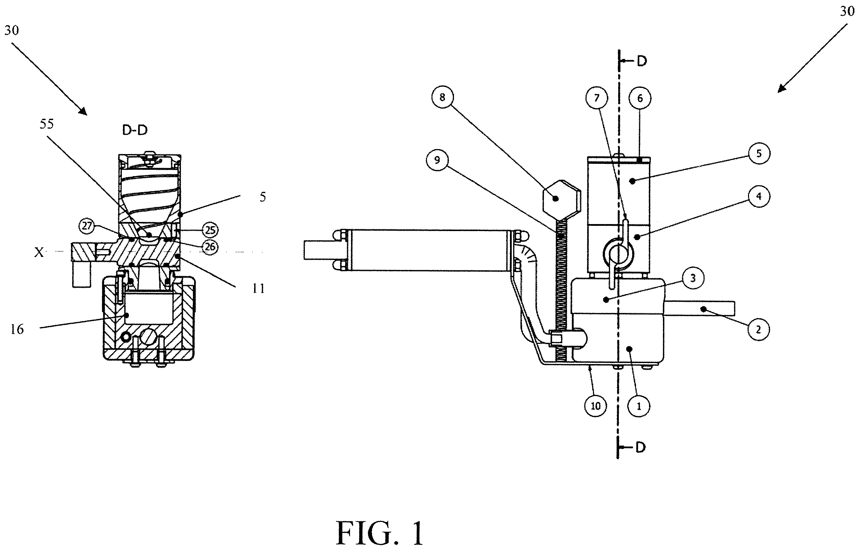

- Figure 1 shows a side view and a front sectional view of a device for vaporizing oxalic acid according to the present invention;

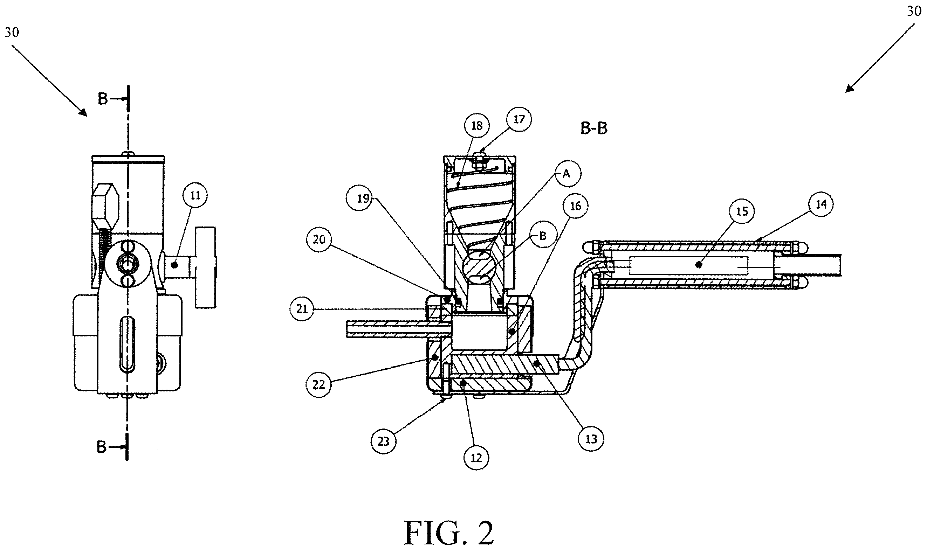

- Figure 2 shows a front view and a side sectional view of a device for vaporizing oxalic acid according to the present invention; and

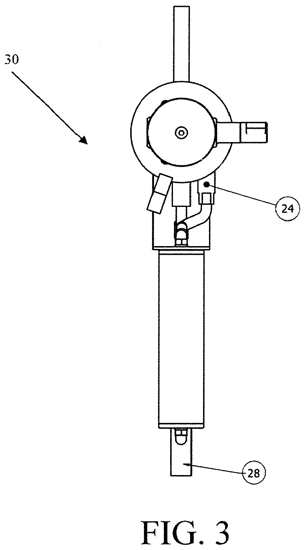

- Figure 3 shows a top view of a device for vaporizing oxalic acid according to the present invention.

With reference to the Figures, a preferred embodiment of the electric device 30 for vaporizing oxalic acid comprising a semi-automatic dosing system of the powder of oxalic acid according to the present invention is shown and described; the electric device 30 comprises a container 16, configured for receiving oxalic acid to be vaporized, heating means 13 configured for heating the container 16 and keeping its temperature at a pre-established value, a tank 5 configured to be filled with oxalic acid in powder, a dispenser 4 connected to the container 16 and to the tank 5, comprising a dosing device 11 which connects the tank 5 to the container 16, said dosing device 11 comprising at least one recess A configured for receiving from the tank 5 a dose of oxalic acid in powder and afterwards pour it in the container 16 to dose the powder of oxalic acid to be introduced in the container 16; the device 30 for vaporizing oxalic acid of the invention further comprises diffusing means 2, for example a diffusing tube 2, connected to the container 16 and configured to allow the vaporized oxalic acid to go out of the container 16 towards the hive.

In a preferred way, the dosing device 11 is connected, rotatable around a substantially horizontal axis X, to the dispenser 4 of oxalic acid in powder and comprises a recess A, for example obtained on its side surface, said recess A being configured for receiving, from an outlet hole 55 obtained in the lower part of the tank 5, a dose of oxalic acid in powder and, afterwards with a rotation by 180° around axis X, pour it in the container 16.

Preferably, the heating means comprise a heating element or heater 13 and a temperature sensitive element 24 connected to the container 16, said heater 13 and temperature sensitive element 24 being further electrically connected to a controlling and regulating device 15 configured to connect the heater 13 to a power supply in order to heat the container 16 and keep its temperature at a pre-established value.

In a preferred way, the dosing device 11, for example with a substantially cylindrical shape and rotatable around a substantially horizontal axis X, for example by means of a crank 7, is connected rotatable to the dispenser 4 of oxalic acid in powder and comprises at least two recesses A, B, for example obtained on its side surface, in a preferred way, at the two ends of a diameter from the section, each recess A, B being configured for receiving, from the outlet hole 55 obtained in the lower part of the tank 5, a dose of oxalic acid in powder and afterwards pour it in the container 16, said recesses A, B being arranged so that, when a recess A, B is next to the outlet hole 55 of the tank 5, the other recess B, A opposite thereto is next to the container 16.

For example, the dosing device 11 rotates around its own axis sliding on two sliding elements 26 and 27, each comprising a O-ring inserted in a slot, obtained on the dosing device 11, and in a preferred way, a layer of polytetrafluoroethylene PTFE interposed between the O-ring and the slot to enable a sliding of the O-ring and therefore the rotation of the dosing device 11; said sliding elements 26, 27, in addition to facilitating the rotation of the dosing device, preventing vaporized oxalic acid from going out.

In a second embodiment, the dosing device 11 comprises a plurality of recesses A, B, preferably, mutually at the same distance.

In a preferred way, the dispenser 4 comprises a ball-type positioning device 25, comprising a retractable ball configured to be inserted inside two seats obtained in the dosing device 11 when there is a perfect alignment of the outlet hole 55 of the tank 5 with the recesses A, B of the dosing device 11, said recesses A, B located by two signs made on the external surface of the dosing device 11 next to them.

In a preferred way, the dispenser 4 is engaged onto a flange 20 for connecting to the container 16.

Preferably, between the container 16 and the flange 20, a gasket 21 is interposed, configured for keeping the flange 20 at a pre-set temperature, by transferring from the container 16 to the flange 20 the amount of heat adapted to make the flange 20 assume the desired temperature. In particular, the gasket 21 is configured to avoid that the flange 20 has too high a temperature, implying that excessive temperatures have been reached both on the upper part of the dispenser 4 and on the tank 5 of oxalic acid in powder, which would bring the powder of oxalic acid contained in said seat to be melted, before reaching the suitable container 16, and on the dosing device 11 which would impair its functionality; the gasket 21 is further configured to avoid that the flange 20 has too cold a temperature, implying that excessively low temperatures are reached on the lower part of the dispenser 4, which would take the vapors of oxalic acid formed inside the container 16 to be crystallized in contact therewith, forming deposits.

The flange 20 reaches the thermal balance (constant temperature) when heat that it manages to dissipate in the external environment or transfer to the coldest elements to which it is connected, is equal to heat which it receives from the container 16 to which it is connected, with the gasket 21 interposed. Heat which crosses the gasket 21 depends on the material of cui it is composed and on its thickness: by acting on these two parameters, it is possible to locate the necessary values to make the flange 20 assume the desired temperature. In particular, gaskets are used which are known to the skilled technician as free from asbestos.

In a preferred way, between the flange 20 and the dispenser 4, there is a junction element 19, for example a ring gasket 19 made of elastomeric material, configured to allow a junction between dispenser 4 and flange 20, preventing vapors of oxalic acid from going out.

In a preferred way, the tank 5 of powder of oxalic acid comprises a scraper 18 preferably connected, through connecting means 17, for example a bolt, to handling means 6 of the scraper 18, for example a plug 6 to which the operator applies a rotation, thereby producing the rotation of the scraper 18 connected thereto; once having handled through the handling means 6, said scraper 18 licks the internal walls of the tank 5, enabling the passage of the powder of oxalic acid from the tank 5, through the outlet hole 55 obtained in the lower part of the tank 5, to one of the recess A, B of the dosing device 11, avoiding that said outlet hole 55 is occluded from accumulations of oxalic acid in powder: alternatively, the handling means 6 of the scraper 18 comprise a motored vibrating and/or rotating system of the scraper 18. In a preferred way, the scraper 18 further comprises projections configured to move the powder of oxalic acid which is not in direct contact with the internal walls of the tank 5.

In a preferred way, the device 30 for vaporizing oxalic acid of the invention comprises vibrating means 8 of the device 30, for example composed of a striker 8 connected to a flexible element 9, configured to bump onto the tank 5, or the dispenser 4, or other parts of the device 30, in order to enable the passage of the powder of oxalic acid from one of the recesses A, B of the dosing device 11 to the container 16; in particular, the operator intervenes by moving away the striker 8 by a few centimeters with consequent flexure of the flexible element 9 connected thereto, to then let said striker 8 go, so that the flexible element 9 connected thereto with an oscillating movement, takes it in contact with the device 30, causing a vibration which will enable the passage of the powder of oxalic acid from one of the recesses A, B of the dosing device 11 to the container 16.

Alternatively, the vibration could be produced by other vibrating means, for example through a motor which rotates an eccentric mass.

Preferably, the container 16 is externally surrounded by a thermal insulation 12, 22 in order to protect a user from the contact with the heated container 16 and reduce heat dispersion and therefore electric energy consumptions.

In a preferred way, the container 16 and the thermal insulation 12, 22 are enclosed by a protecting carter 1, 3.

In a preferred way, the electric device 30 for vaporizing oxalic acid comprising semi-automatic dosing system of the powder of oxalic acid according to the present invention comprises a handle 14 configured to contain therein the controlling and regulating device 15, said handle 14 being connected to the container 16, for example through a connecting element 10 made of a material having a low thermal transmission coefficient which does not transfer heat to the handle 14.

Preferably, the diffusing tube 2 is made of a material which transmits heat, for example metal, to avoid the danger of clogging the diffusing tube 2 due to crystallization and the deposit of oxalic acid in its terminal part for reaching too low temperatures.

In a preferred way, the diffusing tube 2 is connected to the container 16 through a removable connection configured to allow replacing the diffusing tube 2 in order to adapt it to the various types of hives on the market; for example, plastic or polystyrene hives require a diffusing tube externally coated with insulating material, for example PTFE, in order not to damage the plastic or polystyrene once in contact thereto.

In another embodiment, the dosing device 11 comprises a transverse through-hole in place of the recesses A, B, configured to allow the passage of oxalic acid from the tank 5 to the container 16 when said hole is aligned with the hole 55 of the tank 5. The communication between tank 5 and container 16 is interrupted when, rotating the dosing device 11, for example by 90°, the through-hole obtained therein is arranged transversally with respect to the axis of the hole.

Herein below, the operation of the electronic device 30 for vaporizing oxalic acid of the present invention is described.

The tank 5 is filled with oxalic acid in powder which, due to the force of gravity and with the help of the scraper 18, goes out of the tank 5 passing through the outlet hole 55 obtained in the lower part thereof, and enters into the recess A, B of the dosing device 11 which is next to said outlet hole 55, opposite to a second recess B, A placed next to the container 16.

Once the recesses A, B of the dosing device 11 which is next to the hole 55 have been filled with oxalic acid in powder, the operator, by means of the handle 7, applies to the dosing device 11 a first rotation by 180°, so that the recesses A, B of the dosing device 11 which was next to the hole 55 is next to the container 16, and the second recess B, A opposite thereto is next to the outlet hole 55 of the tank 5.

Due to the force of gravity and with the help of the striker 8, the oxalic acid in powder passes from the recesses A, B taken by rotation next to the container 16, suitably heated: the temperature sensitive element 24 connected to the container 16, through the controlling and regulating device 15, modifies the electric supply of the heater 13, connected to the container 16, for keeping the container 16 at the pre-set calibration temperature.

Once inside the heated container 16, the powder of oxalic acid melts, evaporates and goes out as vapor from the diffusing tube 2.

At the same time, the opposite recess B, A of the dosing device 11 taken, following the rotation, next to the outlet hole 55 of the tank 5, is filled with oxalic acid in powder with the help of the scraper 18, to be afterwards taken, following a further rotation of the dosing device 11, next to the container 16, and pour therein its own contents of oxalic acid in powder.

In the embodiment comprising the transverse through-hole in place of the recesses A, B, the dosing device 11 is arranged in order to clog the hole 55, the tank 5 is filled with oxalic acid in powder, the dosing device 11 is rotated in order to allow the passage of oxalic acid from the tank 5 through the hole 55 and the transverse through-hole in place of the recess A, B, to the container 16, the scraper 18 is rotated in order to partially clog the hole 55 and in this way dose the amount of acid to be poured in the container 16, and after that, the dosing device 11 is again rotated in order to clog the hole 55.

## Claims

1. Device for vaporizing oxalic acid comprising: a container (16) configured for receiving oxalic acid to be vaporized, heating means (13) configured for heating the container (16) and keeping its temperature at a pre-established value, a tank (5) configured to be filled with oxalic acid in powder, a dispenser (4) connected to the container (16) and to the tank (5), comprising a dosing device (11) which connects the tank (5) to the container (16), **characterised in that** said dosing device (11) comprising at least one recess (A, B), configured for receiving from the tank (5) a dose of oxalic acid in powder and afterwards pour it in the container (16), wherein it further comprises vibrating means (8) of the device (30) configured to create a vibration to enable the passage of the powder of oxalic acid from the recess (A, B) of the dosing device (11) to the container (16).

2. Device for vaporizing oxalic acid according to claim 1, **characterized in that** it comprises two recesses (A, B) arranged so that when a recess (A, B) is next to an outlet hole (55) obtained in the lower part of the tank (5), another recess (B, A) is next to the container (16).

3. Device for vaporizing oxalic acid according to claim 1 or 2, **characterized in that** the dosing device (11) is rotatable around its own axis (X), so that the recess (A, B) placed next to the tank (5) after a rotation is next to the container (16).

4. Device for vaporizing oxalic acid according to claim 3, **characterized in that** the dosing device 11 comprises a plurality of recesses (A, B).

5. Device for vaporizing oxalic acid according to any one of the previous claims, **characterized in that** the heating means comprise a heater (13) and a temperature sensitive element (24) connected to the container (16), said heater (13) and temperature sensitive element (24) being electrically connected to a controlling and regulating device (15) configured to connect the heater (13) to a power supply in order to heat the container (16) and keep its temperature at a pre-established value.

6. Device for vaporizing oxalic acid according to any one of the previous claims, **characterized in that** the dispenser (4) is engaged onto a flange (20) for its connection to the container (16), and comprises a gasket (21) interposed between the container (16) and the flange (20) and configured for keeping the flange (20) at a pre-set temperature.

7. Device for vaporizing oxalic acid according to any one of the previous claims, **characterized in that** it comprises a scraper (18) handled through handling means (6) so that it licks the internal walls of the tank (5) enabling the passage of the powder of oxalic acid from said tank (5) to said at least one recess (A, B) of the dosing device (11).

8. Device for vaporizing oxalic acid according to claim 7, **characterized in that** the handling means (6) of the scraper (18) comprise a motored vibrating and/or rotating system.

9. Device for vaporizing oxalic acid according to any one of the previous claims, **characterized in that** it comprises a handle (14) connected to the container (16) and configured to contain therein the controlling and regulating device (15), and further comprises diffusing means (2) connected to the container (16) and configured to allow the vaporized oxalic acid to go out of the container (16) towards a hive.

10. Device for vaporizing oxalic acid according to claim 2, **characterized in that** the dosing device (11) comprises a transverse through-hole in place of the recesses (A, B), configured to allow the passage of oxalic acid from the tank (5) to the container (16) when said hole is aligned with the hole (55) of the tank (5).

## Patentansprüche

1. Vorrichtung zum Verdampfen von Oxalsäure, umfassend: einen Behälter (16), der konfiguriert ist, um zu verdampfende Oxalsäure aufzunehmen, eine Heizeinrichtung (13), die konfiguriert ist, um den Behälter (16) zu erwärmen und seine Temperatur auf einem vorbestimmten Wert zu halten, einen Tank (5), der konfiguriert ist zum Befüllen mit pulverisierter Oxalsäure, einen Spender (4), der mit dem Behälter (16) und dem Tank (5) verbunden ist, umfassend einen Spender (11), der den Tank (5) mit dem Behälter (16) verbindet, **gekennzeichnet durch** die Tatsache, dass der Dosierer (11) mindestens einen Hohlraum (A) umfasst, der so konfiguriert ist, dass er aus dem Tank (5) eine Dosis pulverisierter Oxalsäure aufnimmt und sie anschließend in den Behälter (16) gießt, in dem er auch Vibrationsmittel umfasst (8) der Vorrichtung (30), die so konfiguriert ist, dass sie eine Vibration erzeugt, um den Durchgang des Oxalsäurepulvers aus dem Hohlraum (A, B) des Spenders (11) zum Behälter (16) zu erleichtern.

2. Vorrichtung zum Verdampfen von Oxalsäure nach Anspruch 1, **dadurch gekennzeichnet, dass** sie zwei Hohlräume (A, B) umfasst, die so angeordnet sind, dass, wenn ein Hohlraum (A, B) in Übereinstimmung mit einem darin erhaltenen Auslassloch (55) steht im unteren Teil des Tanks (5) befindet sich ein weiterer Hohlraum (B, A) in Übereinstimmung mit dem Behälter (16).

3. Vorrichtung zum Verdampfen von Oxalsäure nach Anspruch 1 oder 2, **dadurch gekennzeichnet, dass** der Dosierer (11) um seine eigene Achse (X) gedreht werden kann, so dass der Hohlraum (A, B) in Übereinstimmung mit dem Tank (5) angeordnet ist nach einer Drehung mit dem Behälter (16) in Übereinstimmung steht.

4. Vorrichtung zum Verdampfen von Oxalsäure nach Anspruch 3, **dadurch gekennzeichnet, dass** der Dosierer 11 mehrere Hohlräume (A, B) aufweist.

5. Vorrichtung zum Verdampfen von Oxalsäure nach einem der vorhergehenden Ansprüche, **dadurch gekennzeichnet, dass** die Heizmittel eine Heizung (13) und ein mit dem Behälter (16) verbundenes temperaturempfindliches Element (24), Heizung (13) genannt, umfassen temperaturempfindliches Element (24), das elektrisch mit einer Steuer- und Regelvorrichtung (15) verbunden ist, die konfiguriert ist, um die Heizung (13) mit einer Stromversorgung zu verbinden, um den Behälter (16) zu erwärmen und seine Temperatur auf einem vorbestimmten Wert zu halten.

6. Vorrichtung zum Verdampfen von Oxalsäure nach einem der vorhergehenden Ansprüche, **dadurch gekennzeichnet, dass** der Verteiler (4) auf einen Flansch (20) zum Anschluss an den Behälter (16) aufgesetzt ist und eine zwischengelegte Dichtung (21) aufweist den Behälter (16) und den Flansch (20) und konfiguriert, um den Flansch (20) auf einer vorbestimmten Temperatur zu halten.

7. Vorrichtung zum Verdampfen von Oxalsäure nach einem der vorhergehenden Ansprüche, **dadurch gekennzeichnet, dass** sie einen Schaber (18) umfasst, der mittels Bewegungsmitteln (6) so bewegt wird, dass er die Innenwände des Tanks (5) erleichtert den Durchgang des Oxalsäurepulvers von dem Tank (5) zu dem mindestens einen Hohlraum (A, B) des Spenders (11).

8. Vorrichtung zum Verdampfen von Oxalsäure nach Anspruch 7, **dadurch gekennzeichnet, dass** die Bewegungsmittel (6) des Schabers (18) ein motorisiertes Vibrations- und/oder Rotationssystem umfassen.

9. Vorrichtung zum Verdampfen von Oxalsäure nach einem der vorhergehenden Ansprüche, **dadurch gekennzeichnet, dass** sie einen Griff (14) umfasst, der mit dem Behälter (16) verbunden und so konfiguriert ist, dass er in seinem Inneren die Steuer- und Einstellvorrichtung (15) enthält ferner eine Diffusoreinrichtung (2) umfasst, die mit dem Behälter (16) verbunden und so konfiguriert ist, dass sie das Ausströmen von verdampfter Oxalsäure aus dem Behälter (16) in Richtung eines Bienenstocks ermöglicht.

10. Vorrichtung zum Verdampfen von Oxalsäure nach Anspruch 2, **dadurch gekennzeichnet, dass** der Dosierer (11) anstelle der Hohlräume (A, B) ein quer verlaufendes Durchgangsloch umfasst, das so konfiguriert ist, dass es den Durchgang von Oxalsäure aus dem Tank (5) zu ermöglicht des Behälters (16), wenn das Loch mit dem Loch (55) des Tanks (5) ausgerichtet ist.

## Revendications

1. Dispositif de vaporisation d'acide oxalique comprenant : un récipient (16) configuré pour recevoir de l'acide oxalique à vaporiser, des moyens de chauffage (13) configurés pour chauffer le récipient (16) et maintenir sa température à une valeur prédéterminée, un réservoir (5) configuré à remplir d'acide oxalique en poudre, un distributeur (4) relié au réservoir (16) et au réservoir (5), comprenant un distributeur (11) qui relie le réservoir (5) au réservoir (16), **caractérisé par** ledit doseur (11) comprend au moins une cavité (A), configurée pour recevoir du réservoir (5) une dose d'acide oxalique en poudre et la déverser ensuite dans le récipient (16), dans lequel il comprend également des moyens vibrants (8) du dispositif (30) configuré pour créer une vibration pour faciliter le passage de la poudre d'acide oxalique de la cavité (A, B) du distributeur (11) vers le récipient (16).

2. Dispositif de vaporisation d'acide oxalique selon la revendication 1, **caractérisé en ce qu'**il comprend deux cavités (A, B) agencées de telle sorte que lorsqu'une cavité (A, B) est en correspondance avec un trou de sortie (55) obtenu en la partie inférieure du réservoir (5) une autre cavité (B, A) est située en correspondance avec le récipient (16).

3. Dispositif de vaporisation d'acide oxalique selon la revendication 1 ou 2, **caractérisé en ce que** le doseur (11) peut être entraîné en rotation sur son propre axe (X), de sorte que la cavité (A, B) placée en correspondance avec le réservoir (5) après une rotation est en correspondance avec le récipient (16).

4. Dispositif de vaporisation d'acide oxalique selon la revendication 3, **caractérisé en ce que** le doseur 11 comprend une pluralité de cavités (A, B).

5. Dispositif de vaporisation d'acide oxalique selon l'une quelconque des revendications précédentes, **caractérisé en ce que** les moyens de chauffage comprennent un réchauffeur (13) et un élément sensible à la température (24) relié au récipient (16), dit réchauffeur (13) et l'élément sensible à la température (24) étant relié électriquement à un dispositif de contrôle et de régulation (15) configuré pour connecter le réchauffeur (13) à une alimentation électrique de manière à chauffer le récipient (16) et à maintenir sa température à une valeur prédéterminée.

6. Dispositif de vaporisation d'acide oxalique selon l'une quelconque des revendications précédentes, **caractérisé en ce que** le distributeur (4) est emmanché sur une bride (20) de raccordement au récipient (16), et comporte un joint (21) placé entre le récipient (16) et la bride (20) et configuré pour maintenir la bride (20) à une température prédéterminée.

7. Dispositif de vaporisation d'acide oxalique selon l'une quelconque des revendications précédentes, **caractérisé en ce qu'**il comporte une raclette (18) déplacée au moyen de moyens de déplacement (6) pour qu'elle effleure les parois internes du réservoir (5) facilitant le passage de la poudre d'acide oxalique dudit réservoir (5) vers ladite au moins une cavité (A, B) du distributeur (11).

8. Dispositif de vaporisation d'acide oxalique selon la revendication 7, **caractérisé en ce que** les moyens de déplacement (6) du racleur (18) comprennent un système motorisé de vibration et/ou de rotation.

9. Dispositif de vaporisation d'acide oxalique selon l'une quelconque des revendications précédentes, **caractérisé en ce qu'**il comprend une poignée (14) reliée au récipient (16) et configurée pour contenir à l'intérieur de celle-ci le dispositif de commande et de réglage (15), et il comprend en outre des moyens diffuseurs (2) reliés au récipient (16) et configurés pour permettre l'écoulement de l'acide oxalique vaporisé du récipient (16) vers une ruche.

10. Dispositif de vaporisation d'acide oxalique selon la revendication 2, **caractérisé en ce que** le doseur (11) comporte un trou traversant transversal à la place des cavités (A, B), configuré pour permettre le passage de l'acide oxalique du réservoir (5) vers le récipient (16) lorsque ledit trou est aligné avec le trou (55) du réservoir (5).
